# EUROPEAN PATENT SPECIFICATION

(11) **EP 0 458 005 B1**
(45) Date of publication and mention of the grant of the patent: **27.03.1996**
(21) Application number: 91100087.5
(22) Date of filing: 02.01.1991
(51) Int. Cl.: B60K 1/00, B60K 7/00, B60K 6/04

(54) **Energy regenerating mechanism of an elektric automobile**
Energierückgewinnungsvorrichtung für ein elektrisches Fahrzeug
Dispositif pour la récupération d'énergie pour un véhicule électrique

(30) Priority: 23.05.1990 JP 131326/90
(43) Date of publication of application: 27.11.1991
(73) Proprietor: Iizuka, Souichi, Setagaya-ku, Tokyo 156 (JP)
(72) Inventor: Iizuka, Souichi, Setagaya-ku, Tokyo 156 (JP); Yamada, Yasuharu, Chiba-shi, Chiba-ken 281 (JP)
(74) Representative: Goddar, Heinz J., Dr.

(56) References cited:
- CH-A- 605 192
- DE-A- 2 722 159
- DE-A- 3 620 335
- US-A- 4 222 450

## Description

The present invention relates to an energy regenerating mechanism of an electric automobile for utilizing a kinetic energy generated when an engine of the automobile idles, particularly to the energy regenerating mechanism of an electric car capable of increasing the travel distance by one time charging of a battery.

There have been conventionally invented various mechanisms for collecting or utilizing a kinetic energy generated while the engine idles as disclosed in Japanese Patent Publication No. 54-95424 in which the turning forth of a drive shaft is transmitted to the kinetic energy transmission shaft and accumulated in elastic springs, in Japanese Patent Publication No. 46-25884 in which kinetic energy of the automoble is accumulated as compressed air or in Japanese Patent Laid-open Publication No. 55-156724 in which the kinetic energy is accumulated by utilizing a distortion of an elastic member. Furthermore, there is disclosed Japanese Patent Laid-Open Publication No. 46-41767 for collecting the electric energy.

The conventional various mechanisms for collecting the kinetic energy physically accumulate the kinetic energy of the automobile, and utilize the accumulated energy at the start of engine. However, these mechanisms are complex and can not accumulate energy sufficiently, hence they are difficult to be put into practical use.

Particularly, the electric car can run practically for about 150 Km per day with one time full charging of a battery. Hence, according to the electric car, it takes much time for charging the battery per day since an output of the full charged battery can be consumed in a day, which was one of the obstacle to have been widely put into practice.

The present invention has been made to solve the problems set forth above.

It is therefore an object of the present invention to provide an energy regenerating mechanism of an automobile (hereinafter referred to as energy regenerating mechanism) capable of converting the kinetic energy into the electric energy and accumulate the electric energy into a battery, particularly adapted for the electric automobile.

An energy regenerating mechanism according to the present invention comprises front and rear motors and front and rear generators respectively fixed to a mobile chassis, the front and rear motors being connected with front and rear wheels by front and rear driving shafts, the front and rear generators, being connected with the front and rear motors by front and rear coupling shafts, characterized in deriving a kinetic energy generated when the engine idles from the driving shafts, converting the thus derived kinetic energy into an electric energy, storing the electric energy into a battery, and utilizing the electric energy when the travel speed is accelerated.

The above and other objects, features and advantages of the present invention will become more apparent from the following description taken in conjunction with the accompanying drawings.
Fig. 1 is a plan view of assistance in explaining the operation of energy regenerating mechanism according to a third embodiment of the present invention; and
Fig. 2 is a plan view of assistance in explaining the operation of energy regenerating mechanism according to a fourth embodiment of the present invention.

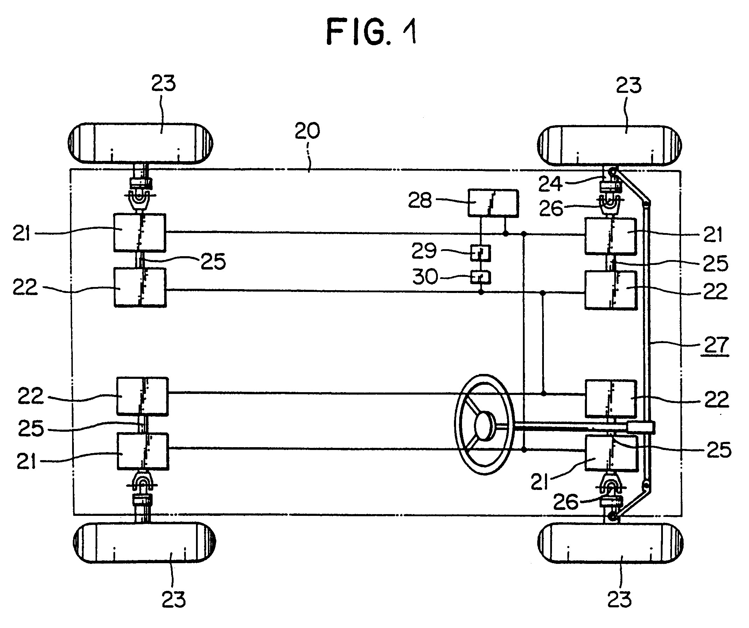

An energy regenerating mechanism according to a first embodiment of the present invention will be described with reference to Fig. 1.

The first embodiment relates to the energy regenerating mechanism in an electric automobile.

An energy regenerating mechanism comprises front and rear motors 21 and front and rear generators 22 respectively fixed to a mobile chassis 20, the front and rear motors 21 being connected with front and rear wheels 23 by front and rear driving shafts 24, the front and rear generators 22 being connected with the front and rear motors 21 by front and rear coupling shafts 25. With such an arrangement, a kinetic energy generated when the automobile runs at idle state where an acceleation pedal is not pressed is derived from the driving shafts 24 and the thus derived kinetic energy is converted into an electric energy. The converted electric energy is stored into a battery 28 and is utilized when the travel speed is accelerated. Designated at 26 are the universal joints, 27 are travel mechanism and 30 are regulators.

The energy regenerating mechanism according to the first embodiment also utilizes an idling energy. The generators 22 are turned on or off associated with a positive or negative torque of the driving shafts 24 which is detected by a strain guage, not shown, mounted on the driving shafts 24 or associated with ON or OFF of the motors 21.

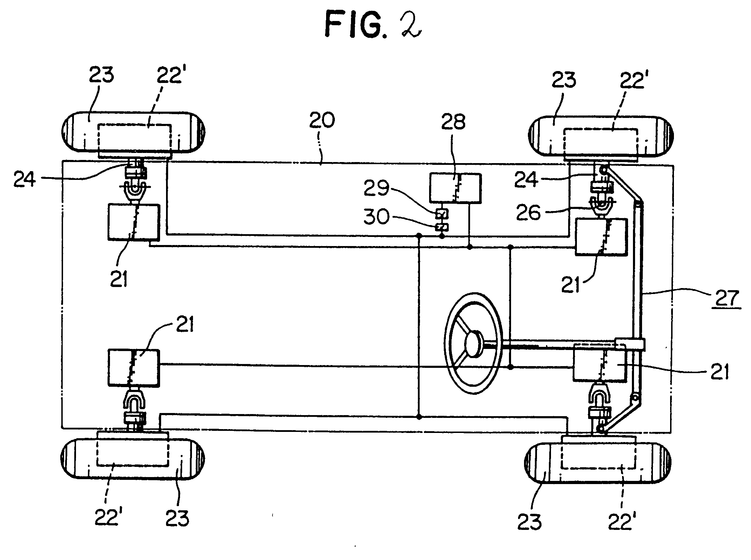

An energy regenerating mechanism according to a second embodiment is illustrated in Fig. 2.

An arrangement of the energy regenerating mechanism is substantially same as that of the first embodiment excepting that front and rear generators 22' are attached to the inside of the front and rear wheels 23, the front and rear generators 22' are connected with the front and rear motors 21 by the front and rear driving shafts 24.

Inasmuch as the motors 21 and the generators 22 or 22' are connected to the wheels 23 by way of the driving shafts 24 and the coupling shafts 25, it is possible to prevent the kinetic energy being lost and utilize the kinetic energy effectively by converting it into the electric energy.

## Claims

1. An electric automobile comprising: a chassis (20); front and rear wheels (23) supporting said chassis (20) for movement; electric motors (21) drivingly connected to said wheels (23) for rotating said wheels (23), said motors (21) being free from mechanical connection to each other; a battery (28) connected in parallel to said electric motors (21) for supplying electrical energy for operating said electric motors (21); separate electricity generators (22) each drivingly connected to one of said wheels (23) for transforming into electrical energy the kinetic energy of said automobile while said motors (21) are not driving said wheels (23), each of said generators (22) being free of electrical connection to its associated motor; conductors connecting said generators (22) in parallel to said battery (28) for supplying said electrical energy for charging said battery (28); and means for turning off said generators (22) when said motors (21) are driving said wheels (23) and for turning on said generators (22) when said automobile is moving and said motors (21) are not driving said wheels (23).

2. An electric automobile according to claim 1, wherein said electricity generators (22) comprise front and rear generators (22') which are attached to the insides of said front and rear wheels (23), said front and rear generators (22') being connected with said motors (21) by front and rear driving shafts (25).

3. An energy regenerating mechanism of an automobile according to claim 2 or 3, wherein said means for turning on and turning off said generators (22, 22') comprises strain gauges (9) mounted on said front and rear driving shafts (25) for detecting the torque of said front and rear driving shafts (25) and connected for turning said generators (22, 22') on or off.

## Patentansprüche

1. Ein elektrisches Fahrzeug mit: einem Chassis (20); Vorderrädern und Hinterrädern (23), die das Chassis (20) für eine Bewegung tragen; elektrischen Motoren (21), die mit den Rädern (23) in Antriebsverbindung zum Drehen der Räder (23) Verbunden sind, wobei die Motoren (21) von jeder mechanischen Verbindung miteinander frei sind; einer Batterie (28), die mit den elektrischen Motoren (21) zum Liefern von elektrischer Energie zum Betreiben der elektrischen Motoren (21) parallel verbunden sind; gesonderten elektrischen Generatoren (22), die jeweils mit den Rädern (23) zum Umwandeln der kinetischen Energie des Fahrzeugs in elektrische Energie in einer Antriebsverbindung sind, wenn die Motoren (21) die Räder (23) nicht antreiben, wobei die Generatoren (22) von einer elektrischen Verbindung mit dem zugehörigen Motor frei sind; Leitern, die die Generatoren (22) parallel mit jeder Batterie (28) zum Führen der elektrischen Energie zum Laden der Batterie (28) verbinden; und Mitteln zum Ausschalten der Generatoren (22), wenn die Motoren (21) die Räder (23) antreiben und zum Einschalten der Generatoren (22), wenn das Fahrzeug sich bewegt und die Motoren (21) die Räder (23) nicht antreiben.

2. Ein elektrisches Fahrzeug nach Anspruch 1, wobei die elektrischen Generatoren (22) vordere und hintere Generatoren (22') aufweisen, die an die Innenseiten der Vorderräder und der Hinterräder (23) angebracht sind, wobei die vorderen Generatoren und die hinteren Generatoren (22') mit den Motoren (21) durch vordere und hintere Antriebswellen (25) verbunden sind.

3. Eine Energierückgewinnungsvorrichtung eines Fahrzeugs nach Anspruch 2 oder 3, wobei die Mittel zum Einschalten und zum Ausschalten der Generatoren (22, 22') Dehnungsmeßstreifen (9) aufweisen, die an den vorderen und hinteren Antriebswellen (25) zum Messen des Drehmoments der vorderen bzw. der hinteren Antriebswelle (25) angebracht sind und zum Ein- und Ausschalten der Generatoren (22, 22') verschaltet sind.

## Revendications

1. Automobile électrique comprenant : un châssis (20) ; des roues avant et arrière (23) portant ledit châssis (20) pour déplacer celui-ci ; des moteurs électriques (21) connectés en commande auxdites roues (23) pour faire tourner lesdites roues (23), lesdits moteurs (21) ne comportant aucune liaison mécanique entre eux ; une batterie (28) connectée en parallèle auxdits moteurs (21) pour fournir l'énergie électrique nécessaire au fonctionnement desdits moteurs (21) ; des générateurs électriques séparés (22) connectés chacun en commande à l'une desdites roues (23) pour transformer en énergie électrique l'énergie cinétique de ladite automobile pendant que lesdits moteurs (21) n'entraînent pas lesdites roues (23), chacun desdits générateurs (22) ne comportant aucune liaison électrique avec son moteur associé ; des conducteurs reliant lesdits générateurs (22) en parallèle à ladite batterie (28) pour transporter ladite énergie électrique permettant de charger ladite batterie (28) ; et un moyen permettant de mettre hors service lesdits générateurs (22) lorsque lesdits moteurs (21) entraînent lesdites roues (23) et de mettre en service lesdits générateurs (22) lorsque ladite automobile se déplace et que lesdits moteurs n'entraînent pas lesdites roues (23).

2. Automobile électrique selon la revendication 1, dans laquelle lesdits générateurs électriques (22) comprennent des générateurs avant et arrière (22') qui sont attachés à l'intérieur desdites roues avant et arrière (23), lesdits générateurs avant et arrière (22') étant reliés auxdits moteurs (21) par des arbres de transmission avant et arrière (25).

3. Mécanisme régénérateur d'énergie d'une automobile selon la revendication 1 ou 2, dans lequel ledit moyen permettant de mettre en ou hors-service lesdits générateurs (22, 22') comprend des tensiomètres (9) montés sur lesdits arbres de transmission avant et arrière (25) pour mesurer le couple desdits arbres de transmission avant et arrière (25) et connectés de manière à mettre en ou hors service lesdits générateurs (22, 22').
